# EUROPÄISCHE PATENTSCHRIFT

(11) **EP 2 568 808 B1**
(45) Veröffentlichungstag und Bekanntmachung des Hinweises auf die Patenterteilung: **22.06.2016**
(21) Anmeldenummer: 11719271.6
(22) Anmeldetag: 13.05.2011
(51) Int. Cl.: A01P 9/00, A01N 59/26, A01N 25/00, A01N 37/44, A01N 59/16

(54) **KÖDERFORMULIERUNGEN ZUR BEKÄMPFUNG VON SCHNECKEN**
BAIT FORMULATIONS FOR CONTROLLING SLUGS AND SNAILS
FORMULATIONS D'APPÂTS POUR LUTTER CONTRE LES GASTÉROPODES

(30) Priorität: 14.05.2010 EP 10162814
(43) Veröffentlichungstag der Anmeldung: 20.03.2013
(73) Patentinhaber: COMPO GmbH, 48157 Münster (DE)
(72) Erfinder: SCHWEINSBERG, Otto, 55494 Rheinböllen (DE); ZIEGLER, Arthur, 55566 Kirschroth (DE)
(74) Vertreter: Reitstötter Kinzebach
(86) Internationale Anmeldenummer: PCT/EP2011/057751
(87) Internationale Veröffentlichungsnummer: WO 2011/141566

(56) Entgegenhaltungen:
- EP-A1- 1 402 776
- WO-A1-99/39576
- WO-A1-2009/048345
- US-A1- 2003 181 332
- ANONYMOUS: 'Dissolvine GL Technical Brochure', [Online] 01 April 2010, Seiten 1 - 16, XP055058393 Gefunden im Internet: <URL:http://www.akzonobel.com/dissolvine/sy stem/images/AkzoNobel_Gl_Technical_brochure _tcm108-40030.pdf> [gefunden am 2013-04-04]
- AKZO NOBEL: 'Dissolvine GL' INTERNET CITATION, [Online] November 2002, Seite 10PP, XP008170313 Gefunden im Internet: <URL:http://www.abacisucevre.com/DC/2007_06 _29AbaciKimya/Dissolvine_GL_brochure%5B1%5D .pdf> [gefunden am 2014-02-07]

## Beschreibung

Die vorliegende Erfindung betrifft Köderformulierungen, umfassend wenigstens ein Eisensalz, wenigstens eine aus Methylglycin-N,N-diessigsäure, Glutamin-N,N-diessig-säure, deren Alkalimetallsalzen, Erdalkalimetallsalz und Ammoniumsalzen ausgewählte Komponente; wenigstens eine stärkehaltige Komponente und Ethylen-1,2-diamino-N,N,N',N'-tetraessigsäure und/oder ein Salz davon. Die Erfindung betrifft auch die Verwendung dieser Köderformulierung zur Bekämpfung von landlebenden Schnecken sowie ein Verfahren zur Bekämpfung von landlebenden Schnecken unter Verwendung der erfindungsgemäßen Köderformulierung.

Schnecken können ein beträchtliches Problem in Landwirtschaft und Gartenbau darstellen und vor allem in regenreichen Jahren hohe wirtschaftliche Schäden verursachen. So können viele Schneckenarten, insbesondere Nacktschnecken, Pflanzen bis zum Kahlfraß schädigen und die saisonale Ernte völlig vernichten. Außerdem sind Schnecken Zwischenwirte vieler Parasiten und Krankheitserreger. So ist die Bernsteinschnecke Zwischenwirt für den Saugwurm *Leucochloridium paradoxum,* der Vögel befällt; und einige Nacktschneckenarten verbreiten Pflanzenpathogene. Auch Neozoen sind problematisch, wie die in den 1970er Jahren aus Westeuropa eingeschleppte Spanische Wegschnecke (*Arion lusitanicus* oder *Arion vulgaris*), die in Mitteleuropa keine natürlichen Fressfeinde hat und einheimische Schneckenarten verdrängt.

Die Bekämpfung von Schnecken erfolgt meist durch die Verwendung von Kontaktmolluskiziden oder Fraßmolluskiziden, wobei Fraßgifte, insbesondere in Form von Köderformulierungen, in der Regel eine höhere Wirksamkeit aufweisen. Übliche Köderformulierungen enthalten Methiocarb, Metaldehyd, Metallsalze, wie Aluminiumsulfat oder Eisen(III)phosphat, oder Metallchelate, wie Eisensalze von EDTA, und ein Fraßmittel. Metaldehyd ist zwar ein effektives Molluskizid, wirkt aber nicht selektiv und stellt daher, insbesondere bei Fehlanwendung, eine Gefahr für andere Tiere, insbesondere Wirbeltiere, wie Vögel und Säugetiere, dar. Auch Methiocarb steht im Verdacht, auf andere Tiere und insbesondere Säugetiere toxisch zu wirken und diese zu schädigen. Die Metallsalze sind zwar nicht oder zumindest weniger toxisch als Methiocarb und Metaldehyd, aber ihre Wirksamkeit ist nicht immer befriedigend. Die Metallchelate auf Basis von EDTA sind zwar molluskizid gut wirksam, aber EDTA ist biologisch nicht gut abbaubar und gilt zudem, wenn es in größerer Menge auf den Boden ausgebracht wird, als ökologisch bedenklich, da es Schwermetalle aus dem Boden lösen und bioverfügbar machen kann.

WO 96/05728 beschreibt molluskizide Fraßköderformulierungen, die neben einem inerten essbaren Träger ein Eisen(III)edetat oder ein Eisen(III)hydroxyethylderivat von EDTA oder aber eine einfache Eisenverbindung in Kombination mit EDTA oder einem Hydroxyethylderivat von EDTA enthalten. Die Mengen an EDTA in diesen Formulierungen sind vergleichsweise hoch und liegen vorzugsweise im Bereich von 0,7 bis 1,7 Gew.-%.

WO 99/39576 beschreibt molluskizide Fraßköderformulierungen, die neben einem inerten essbaren Träger eine Eisenverbindung und Ethylendiamindibernsteinsäure (EDDS) oder ein Salz davon enthalten. EDDS ist vergleichsweise teuer.

WO 2009/048345 beschreibt molluskizide Fraßköderformulierungen, die neben einem inerten essbaren Träger Eisenpulver, also elementares Eisen, oder eine pulverförmige Eisenlegierung sowie wenigstens einen Komplexbildner enthalten. Bevorzugte Komplexbildner sind EDTA, dessen Salze und Gemische mit anderen Komplexbildnern.

Aufgabe der vorliegenden Erfindung war es, Köderformulierungen mit molluskizider Wirksamkeit bereitzustellen, die die oben genannten Nachteile des Standes der Technik nicht aufweisen. Insbesondere sollten die Köderformulierungen bei vergleichbarer molluskizider Wirksamkeit nicht toxisch sein und eine bessere Umweltverträglichkeit aufweisen. Neben der molluskiziden Wirkung sollen die Köderformulierungen gewährleisten, dass die Schnecken schnell ihren Schadfraß einstellen, bevor sie aufgrund der tödlichen Wirkung der Köderformulierung sterben.

Diese und weitere Aufgaben werden durch die im Folgenden beschriebenen festen Köderformulierungen gelöst.

Die Erfindung betrifft somit Köderformulierungen in fester Form, enthaltend:
a) wenigstens ein Eisensalz, das vorzugsweise ausgewählt ist unter Eisensalzen, worin Eisen in der Oxidationsstufe +2 oder +3 vorliegt, und Gemischen davon;
b) die Komponente b) ausgewählt ist aus Methylglycin-N,N-diessigsäure, den Alkalimetallsalzen, Erdalkalimetallsalzen und Ammoniumsalzen davon und deren Gemischen;
c) gegebenenfalls die Komponente c) ausgewählt ist aus Glutamin-N,N-diessigsäure, den Alkalimetallsalzen, Erdalkalimetallsalzen und Ammoniumsalzen davon und deren Gemischen;
d) wenigstens eine stärkehaltige Komponente;
und
e) Ethylen-1,2-diamino-N,N,N',N'-tetraessigsäure und/oder ein Salz davon.
Die erfindungsgemäßen Köderformulierungen weisen eine hohe molluskizide Wirkung auf und verringern Fraßschäden in signifikanter Weise. Anders als im Stand der Technik werden diese vorteilhaften Wirkungen auch dann erreicht, wenn die erfindungsgemäßen Formulierungen kein EDTA oder EDDS oder nur geringe Mengen davon enthalten, z. B. bei einem Gehalt von EDTA oder EDDS, der unterhalb von 2000 ppm, z. B. bei maximal 1900 ppm liegt, wobei EDTA und EDDS jeweils als freie Säure gerechnet werden und der Gehalt auf das Gesamtgewicht der Köderformulierung bezogen ist.
Die nachfolgenden Ausführungen zu bevorzugten Ausgestaltungen der erfindungsgemäßen Köderformulierungen, insbesondere zu bevorzugten Ausgestaltungen der darin enthaltenen Komponenten a) bis e), weiterer optionaler Komponenten und ihrer Gewichtsverhältnisse gelten sowohl allein für sich genommen als auch in jeder denkbaren Kombination miteinander. Hier und im Folgenden werden die Begriffe Formulierung und Köderformulierung synonym verwendet.

Als Eisensalze kommen grundsätzlich alle Eisensalze und deren Hydrate in Betracht, die für die Anwendung in Köderformulierungen zugelassen sind oder die bekanntermaßen eine molluskizide Wirkung besitzen. Die Eisensalze können sowohl zwei- als auch dreiwertiges Eisen enthalten, d. h. bei den Eisensalzen handelt es sich um Salze, in denen Eisen in der Oxidationsstufe +2 oder in der Oxidationsstufe +3 vorliegt oder um Gemische davon. Geeignete Eisensalze sind beispielsweise Eisen(II)sulfat, Eisen(II) phosphat, Eisen(III)pyrophosphat, Eisen(III)orthophosphat, Eisen(III)citrat, Eisen(II)edetat, Eisen(III)edetat, Eisen(III)oxid, Eisen(III)albuminat, Eisen(III)chlorid, Eisen(II)gluconat, Eisen(II)lactat, Eisen(III)nitrat, Eisen(II)stearat, Eisen(III)stearat, Eisen(III)tartrat, Eisenfumarat, Eisenproteine, Eisenkohlenhydrate wie Eisengluconat, wobei die vorgenannten Salze in wasserfreier Form oder der Hydratform vorliegen können. Geeignet sind auch Gemische der vorgenannten Salze. Bevorzugt sind hierunter Eisen(II)sulfat, Eisen(III)phosphat, Eisen(III)citrat, Eisen(II)edetat und Eisen(III)edetat sowie die Hydrate der vorgenannten Eisensalze und Gemische davon, wobei Eisen(II)sulfat und Eisen(III)phosphat sowie deren Hydrate und Gemische noch stärker bevorzugt sind. Besonders bevorzugt verwendet man als Komponente a) ein feinteiliges Eisensalz, das eine mittlere Primärpartikelgröße < 1 µm, insbesondere < 0,5 µm, z. B. im Bereich von 0,02 bis < 1 µm, insbesondere im Bereich von 0,03 bis 0,5 µm (bestimmt visuell mittels Rasterelektronenmikroskopie) aufweist. Speziell verwendet man als Komponente a) Eisen(III)orthophosphat. Besonders bevorzugt verwendet man als Komponente a) ein feinteiliges Eisen(III)orthophosphat, das eine mittlere Primärpartikelgröße < 1 µm, insbesondere < 0,5 µm, z. B. im Bereich von 0,02 bis < 1 µm, insbesondere im Bereich von 0,03 bis 0,5 µm (bestimmt visuell mittels Rasterelektronenmikroskopie) aufweist. Derartige Eisen(III)orthophosphate sind z. B. aus der WO 2009/050055 oder der WO 2008/009592 bekannt.
Die Eisensalze sind in den Köderformulierungen in einer Gesamtmenge von vorzugsweise 0,01 bis 5 Gew.-%, besonders bevorzugt 0,1 bis 3 Gew.-%, insbesondere von 0,1 bis 1,5 Gew.-%, speziell von 0,1 bis 0,9 Gew.-%, bezogen auf Eisen (d. h. das Anion wird bei dieser Berechnung nicht berücksichtigt) und bezogen auf das Gesamtgewicht der Köderformulierung, enthalten.

Gemäß der erfindungsgemäßen Ausführungsform enthalten die erfindungsgemäßen Köderformulierungen die Komponente b), d. h. Methylglycin-N,N-diessigsäure (synonym: Alanin-N,N-diessigsäure; MGDA) und/oder ein Alkalimetallsalz, Erdalkalimetallsalz oder Ammoniumsalz davon, oder ein dieser Salze oder ein Gemisch von MGDA mit einem oder mehreren seiner Salze. MGDA besitzt folgende Struktur: 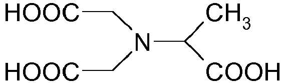 und kann in den erfindungsgemäßen Formulierungen sowohl als freie Säure als auch als Alkalimetallsalz, Erdalkalimetallsalz oder Ammoniumsalz davon oder Gemische der Säure mit den Salzen oder als Gemische der Salze des MGDA vorliegen. In den erfindungsgemäßen Formulierungen kann MGDA sowohl in der L- als auch in der D-Form oder in Form von Gemischen der D- und der L-Form, beispielsweise in Form seines Racemats, eingesetzt werden. Üblicherweise wird MGDA in Form seines Racemats eingesetzt.

Geeignete Alkalimetallsalze des MGDA sind beispielsweise die Lithium-, Natrium- und Kaliumsalze, wobei die Natrium- und Kaliumsalze bevorzugt sind. Geeignete Erdalkalimetallsalze des MGDA sind beispielsweise die Magnesium- und Calciumsalze. Unter den Salzen des MGDA sind die Alkalimetallsalze und insbesondere die Natrium- und Kaliumsalze bevorzugt.

Bei den Salzen des MGDA kann es sich um die Monosalze, Disalze oder Trisalze oder auch um Mischformen davon halten, d. h. MGDA kann in unterschiedlichen Graden teilneutralisiert oder vollständig neutralisiert vorliegen. Außerdem können die Salze einheitlich oder gemischt sein. Unter einheitlichen Salzen versteht man solche Salze, die nur eines der genannten Kationen enthalten, während in gemischten Salzen verschiedene der genannten Kationen vorliegen.

Bevorzugt verwendet man als Komponente b) MGDA in Form eines seiner Natriumsalze, insbesondere in Form des Trinatriumsalzes.

Die Komponente b) ist in den Köderformulierungen in der Regel in einer Gesamtmenge von 0,05 bis 10 Gew.-%, vorzugsweise 0,1 bis 5 Gew.-%, insbesondere von 0,2 bis 3 Gew.-%, besonders bevorzugt von 0,2 bis 1,8 Gew.-%, und ganz besonders bevorzugt von 0,3 bis 1,5 Gew.-%, bezogen auf die freie Säure (d. h. das/die gegebenenfalls enthaltene(n) Gegenkation(en) wird/werden bei dieser Berechnung nicht berücksichtigt) und bezogen auf das Gesamtgewicht der Köderformulierung, enthalten.

In einer anderen Ausführungsform enthalten die erfindungsgemäßen Formulierungen neben den Komponenten a), b) und d) gegebenenfalls die Komponente c), nämlich Glutamin-N,N-diessigsäure und/oder ein Alkalimetallsalz, Erdalkalimetallsalz oder Ammoniumsalz davon. Glutamin-N,N-diessigsäure (GLDA) besitzt folgende Struktur 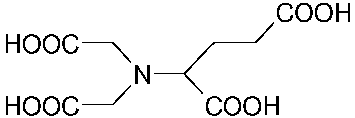 und kann in der erfindungsgemäßen Formulierung sowohl als freie Säure als auch als Alkalimetallsalz, Erdalkalimetallsalz oder Ammoniumsalz davon oder Gemische der Säure mit den Salzen oder als Gemische der Salze des GLDA vorliegen. In den erfindungsgemäßen Formulierungen kann GLDA sowohl in der L- als auch in der D-Form oder in Form von Gemischen der D- und der L-Form, beispielsweise in Form seines Racemats, eingesetzt werden. Üblicherweise wird GLDA in Form seines Racemats eingesetzt.

Geeignete Alkalimetallsalze des GLDA sind beispielsweise die Lithium-, Natrium- und Kaliumsalze, wobei die Natrium- und Kaliumsalze bevorzugt sind. Geeignete Erdalkalimetallsalze des GLDA sind beispielsweise die Magnesium- und Calciumsalze. Unter den Salzen des GLDA sind die Alkalimetallsalze und insbesondere die Natrium-und Kaliumsalze bevorzugt.

Bei den Salzen des GLDA kann es sich um die Monosalze, Disalze, Trisalze oder Tetrasalze oder auch um Mischformen davon handeln, d. h. GLDA kann in unterschiedlichen Graden teilneutralisiert oder vollständig neutralisiert vorliegen. Außerdem können die Salze einheitlich oder gemischt sein. Unter einheitlichen Salzen versteht man solche Salze, die nur eines der genannten Kationen enthalten, während in gemischten Salzen verschiedene der genannten Kationen vorliegen.

Bevorzugt verwendet man als Komponente c) GLDA in Form des Tetranatriumsalzes.

Sofern vorhanden, ist Glutamin-N,N-diessigsäure bzw. deren Alkalimetallsalz, Erdalkalimetallsalz oder Ammoniumsalz in den erfindungsgemäßen Formulierungen in einer Konzentration von in der Regel 0,01 bis 2,5 Gew.-%, vorzugsweise 0,05 bis 2 Gew.-%, insbesondere von 0,1 bis 1,5 Gew.-% und speziell von 0,1 bis 1 Gew.-%, gerechnet als freie Säure und bezogen auf das Gesamtgewicht der Köderformulierung, enthalten.

Gemäß einer besonders bevorzugten Ausführungsform enthalten die erfindungsgemäßen Köderformulierungen sowohl die Komponente b) als auch die Komponente c), d. h. eine Kombination von MGDA und/oder eines ihrer Salze und GLDA und/oder eines ihrer Salz, wobei die Salze des GLDA und des MGDA unter deren Alkalimetallsalzen, Erdalkalimetallsalzen und Ammoniumsalzen ausgewählt sind. In dieser Ausführungsform enthält die erfindungsgemäße Formulierung GLDA und MGDA bzw. deren Salze in einer solchen Menge, dass das Gewichtsverhältnis der Gesamtmenge an GLDA bzw. deren Alkalimetallsalz oder Erdalkalimetallsalz zur Gesamtmenge an MGDA bzw. deren Alkalimetallsalz oder Erdalkalimetallsalz vorzugsweise im Bereich von 1 : 0,3 bis 1 : 20, besonders bevorzugt von 1 : 0,4 bis 1 : 15, stärker bevorzugt von 1 : 0,5 bis 1 : 10, noch stärker bevorzugt von 1 : 0,8 bis 1 : 10 und insbesondere von 1 : 1 bis 1 : 10, jeweils bezogen auf die freien Säuren, liegt.

Gemäß einer anderen besonders bevorzugten Ausführungsform enthalten die erfindungsgemäßen Köderformulierungen die Komponente b) ohne die Komponente c), d. h. MGDA und/oder eines der Salze davon und kein GLDA bzw. keines der Salze des GLDA.

"Bezogen auf die freien Säuren" bzw. "gerechnet als freie Säure" bedeutet im Zusammenhang mit GLDA und MGDA, dass das/die gegebenenfalls enthaltene(n) Gegenkation(en) bei der Berechnung der Konzentration bzw. des Gewichtsverhältnisses von MGDA zu GLDA nicht berücksichtigt wird/werden.

Bevorzugt sind insbesondere erfindungsgemäße Köderformulierungen, die sowohl die Komponente b) als auch die Komponente c) enthalten. In diesen bevorzugten Köderformulierungen ist Glutamin-N,N-diessigsäure und/oder ein Alkalimetallsalz, Erdalkalimetallsalz oder Ammoniumsalz davon in einer Konzentration von 0,01 bis 2,5 Gew.-%, vorzugsweise 0,05 bis 2 Gew.-%, insbesondere von 0,1 bis 1,5 Gew.-% und speziell von 0,1 bis 1 Gew.-%, gerechnet als freie Säure und, bezogen auf das Gesamtgewicht der Köderformulierung, enthalten, wobei die Gesamtkonzentration an Glutamin-N,N-diessigsäure und Methylglycin-N,N-diessigsäure, gerechnet als freie Säure und, bezogen auf das Gesamtgewicht der Köderformulierung, vorzugsweise im Bereich von 0,1 bis 10 Gew.-%, insbesondere im Bereich von 0,2 bis 5 Gew.-%, besonders bevorzugt im Bereich von 0,2 bis 3 Gew.-%, ganz besonders bevorzugt im Bereich von 0,2 bis 1,8 Gew.-% und speziell im Bereich 0,3 bis 1,5 Gew.-% liegt.

Besonders bevorzugt enthält die erfindungsgemäße Formulierung Glutamin-N,N-diessigsäure und/oder ein Alkalimetallsalz, Erdalkalimetallsalz oder Ammoniumsalz davon in einer Konzentration von 0,01 bis 2 Gew.-% und insbesondere von 0,1 bis 1 Gew.-%, gerechnet als freie Säure, wobei die Gesamtkonzentration an Glutamin-N,N-diessigsäure und Methylglycin-N,N-diessigsäure, gerechnet als freie Säure und, bezogen auf das Gesamtgewicht der Köderformulierung, im Bereich von 0,1 bis 10 Gew.-%, vorzugsweise 0,11 bis 5 Gew.-% oder 0,2 bis 5 Gew.-%, besonders bevorzugt im Bereich von 0,2 bis 3 Gew.-%, ganz besonders bevorzugt im Bereich von 0,2 bis 1,8 Gew.-% und speziell im Bereich 0,3 bis 1,5 Gew.-% liegt.

Die erfindungsgemäße Köderformulierung enthält weiterhin eine stärkehaltige Substanz als Komponente d). Bei der stärkehaltigen Komponente d) kann es sich um jedes beliebige stärkehaltige Produkt handeln, das für Schnecken essbar und nicht abstoßend ist. Beispiele für geeignete stärkehaltige Substanzen als Komponente d) sind Mehle, wie Getreidemehle, z. B. Weizen-, Mais-, Hirse-, Roggen-, Tritikale-, Haferund Gerstemehl, Reismehl oder Kartoffelmehl, Kleie, Brotkrumen, Samen, Samenteile, aus Kartoffel-, Getreide- oder Reismehl gewonnene Stärke und Gemische davon. Hierunter bevorzugt sind Getreidemehle, Reismehl und Gemische davon. Bevorzugte Getreidemehle sind Weizen-, Tritikale- und Maismehl, wobei Weizenmehl (sowohl Hart- als auch Weichweizenmehl) stärker bevorzugt ist. Insbesondere umfasst die stärkehaltige Komponente d) Weizenmehl und speziell Weichweizenmehl. Sofern die Komponente d) partikelförmig ist, so liegt sie vorzugsweise in feinkörniger Form vor, bevorzugt in Korngrößen von höchstens 250 µm und insbesondere von höchstens 180 µm, bestimmt durch Siebanalyse.

Wenn Mehl als Komponente d) eingesetzt wird, so ist dies vorzugsweise in feinkörniger Form vorhanden, bevorzugt in Korngrößen von höchstens 250 µm und insbesondere von höchstens 180 µm.

Die stärkehaltige Substanz ist in der erfindungsgemäßen Formulierung in der Regel in einer Menge von 60 bis 99,89 Gew.-%, vorzugsweise von 70 bis 99,85 Gew.-%, insbesondere von 75 bis 99,8 Gew.-%, besonders bevorzugt von 75 bis 99 Gew.-%, bezogen auf das Gesamtgewicht der Köderformulierung, enthalten.

In der erfindungsgemäßen Ausführungsform enthalten die erfindungsgemäßen Formulierungen zusätzlich zu den Komponenten b gegebenenfalls c), insbesondere in Kombination mit einer Mischung der Komponenten b) und c)
e1) Ethylen-1,2-diamino-N,N,N',N'-tetraessigsäure (EDTA) und/oder ein Salz davon (Komponente e1), in der Regel in einer Menge von höchstens 0,19 Gew.-%, z. B. in einer Menge von 0,01 bis 0,19 Gew.-%, vorzugsweise in einer Menge von 0,03 bis 0,18 Gew.-% und insbesondere in einer Menge von 0,05 bis 0,15 Gew.-%, bezogen auf die freie Säure und bezogen auf das Gesamtgewicht der Köderformulierung.

"Gerechnet als/bezogen auf die freie Säure" bedeutet, dass das/die gegebenenfalls enthaltene(n) Gegenkation(en) bei dieser Berechnung nicht berücksichtigt wird/werden.

EDTA kann in der erfindungsgemäßen Formulierung sowohl als freie Säure als auch als Salz, z. B. als Alkalimetallsalz, Erdalkalimetallsalz, Ammoniumsalz, Eisensalz bzw. Eisenkomplex oder Gemische der Säure mit den Salzen oder als Gemische der Salze des EDTA vorliegen.

Geeignete Alkalimetallsalze sind beispielsweise die Lithium-, Natrium- und Kaliumsalze, wobei die Natrium- und Kaliumsalze bevorzugt sind. Geeignete Erdalkalimetallsalze sind beispielsweise die Magnesium- und Calciumsalze. Geeignete Eisensalze bzw. Komplexe sind Eisen(II)edetat und Eisen(III)edetat. Unter den Salzen sind die Alkalimetallsalze und insbesondere die Natrium- und Kaliumsalze, speziell die Natriumsalze, bevorzugt.

Bei den Salzen kann es sich um die Monosalze, Disalze, Trisalze oder Tetrasalze oder auch um Mischformen davon handeln, d. h. EDTA kann in unterschiedlichen Graden teilneutralisiert oder vollständig neutralisiert vorliegen. Außerdem können die Salze einheitlich oder gemischt sein. Unter einheitlichen Salzen versteht man solche Salze, die nur eines der genannten Kationen enthalten, während in gemischten Salzen verschiedene der genannten Kationen vorliegen.

Bevorzugt verwendet man als Komponente e1) EDTA in Form der freien Säure oder in Form des Eisenkomplexes, wie Fe(II)edetat oder Fe(III)edetat.

Vorzugsweise wird jedoch die Konzentration an EDTA, sei es in Form der freien Säure oder in Form eines Salzes oder Komplexes davon, in den erfindungsgemäßen Formulierungen einen Wert von 0,19 Gew.-%, insbesondere von 0,15 Gew.-%, gerechnet als freie Säure und, bezogen auf das Gesamtgewicht der Köderformulierung, nicht überschreiten.

In einer weiteren bevorzugten Ausführungsform enthalten die erfindungsgemäßen Formulierungen zusätzlich zu den Komponenten b gegebenenfalls c), insbesondere in Kombination mit einer Mischung der Komponenten b) und c)
e2) Ethylendiaminodibernsteinsäure (EDDS) und/oder ein Salz davon (Komponente e2) in einer Menge von in der Regel höchstens 0,19 Gew.-%, z. B. in einer Menge von 0,01 bis 0,19 Gew.-%, vorzugsweise von 0,03 bis 0,18 Gew.-% und insbesondere von 0,05 bis 0,15 Gew.-%, bezogen auf die freie Säure und bezogen auf das Gesamtgewicht der Köderformulierung.

"Gerechnet als/bezogen auf die freie Säure" bedeutet, dass das/die gegebenenfalls enthaltene(n) Gegenkation(en) bei dieser Berechnung nicht berücksichtigt wird/werden.

EDDS kann in den erfindungsgemäßen Köderformulierungen sowohl als freie Säure als auch als Salz, z. B. als Alkalimetallsalz, Erdalkalimetallsalz, Ammoniumsalz, Eisensalz bzw. Eisenkomplex oder Gemische der Säure mit den Salzen oder als Gemische der Salze des EDDS, vorliegen. EDDS selber weist zwei Asymmetriezentren im Molekül auf und kann daher in Form eines Diastereomerengemischs oder in Form der reinen Diastereomere, z. B. in Form des S,S-Enantiomers, des R,R-Enantiomers oder des R,S-Diastereomers vorliegen.

Geeignete Alkalimetallsalze sind beispielsweise die Lithium-, Natrium- und Kaliumsalze, wobei die Natrium- und Kaliumsalze bevorzugt sind. Geeignete Erdalkalimetallsalze sind beispielsweise die Magnesium- und Calciumsalze. Geeignete Eisensalze bzw. Komplexe sind Eisen(II)EDDS und Eisen(III)EDDS. Unter den Salzen sind die Alkalimetallsalze und insbesondere die Natrium- und Kaliumsalze, speziell die Natriumsalze, bevorzugt.

Bei den Salzen kann es sich um die Monosalze, Disalze, Trisalze oder Tetrasalze oder auch um Mischformen davon halten, d. h. EDDS kann in unterschiedlichen Graden teilneutralisiert oder vollständig neutralisiert vorliegen. Außerdem können die Salze einheitlich oder gemischt sein. Unter einheitlichen Salzen versteht man solche Salze, die nur eines der genannten Kationen enthalten, während in gemischten Salzen verschiedene der genannten Kationen vorliegen.

Bevorzugt verwendet man als Komponente e2) EDDS in Form der freien Säure, in Form des Trinatriumsalzes oder in Form eines Eisenkomplexes, wie Fe(II)EDDS oder Fe(III)EDDS.

Vorzugsweise wird jedoch die Konzentration an EDDS, sei es in Form der freien Säure oder in Form eines Salzes oder Komplexes davon, in den erfindungsgemäßen Formulierungen einen Wert von 0,19 Gew.-%, insbesondere von 0,15 Gew.-%, gerechnet als freie Säure und, bezogen auf das Gesamtgewicht der Köderformulierung, nicht überschreiten.

In der erfindungsgemäßen Ausführungsform der Erfindung enthält die Köderformulierung neben den Komponenten a), b) gegebenenfalls c) und d) die Komponente e1).

In einer weiteren bevorzugten Ausführungsform der Erfindung enthält die erfindungsgemäße Köderformulierung neben den Komponenten a), b) gegebenenfalls c) und d) die Komponenten e1) und e2). In dieser Ausführungsform liegt das Verhältnis von e1) und e2) (Gewichtsverhältnis von EDTA zu EDDS, jeweils gerechnet als freie Säure), vorzugsweise im Bereich von 1 : 20 bis 20 : 1, insbesondere im Bereich von 1 : 10 bis 10 : 1. Die Gesamtkonzentration an Komponente e1) + Komponente e2) wird in der Regel 0,3 Gew.-% und insbesondere 0,19 Gew.-% oder 0,15 Gew.-%, jeweils gerechnet als freie Säure und, bezogen auf das Gesamtgewicht der Köderformulierung, nicht überschreiten und liegt z. B. im Bereich von 0,01 bis 0,3 Gew.-%, häufig im Bereich von 0,02 bis 0,19 Gew.-%, vorzugsweise im Bereich von 0,03 bis 0,18 Gew.-% und insbesondere im Bereich von 0,05 bis 0,15 Gew.-%, bezogen auf die freie Säure und bezogen auf das Gesamtgewicht der Köderformulierung.

In einer weiteren bevorzugten Ausführungsform der Erfindung enthalten die erfindungsgemäßen Köderformulierungen:
a) 0,01 bis 5 Gew.-%, vorzugsweise 0,1 bis 3 Gew.-%, insbesondere 0,1 bis 1,5 Gew.-%, speziell 0,1 bis 0,9 Gew.-%, bezogen auf das Gesamtgewicht der Köderformulierung, Eisen in Form des wenigstens eines Eisensalzes;
b) 0,1 bis 5 Gew.-%, insbesondere 0,2 bis 3 Gew.-%, besonders bevorzugt 0,2 bis 1,8 Gew.-%, und ganz besonders bevorzugt 0,3 bis 1,5 Gew.-%, bezogen auf das Gesamtgewicht der Köderformulierung, der Komponente b);
c) gegebenenfalls 0,01 bis 2,5 Gew.-%, vorzugsweise 0,05 bis 2 Gew.-%, insbesondere 0,1 bis 1,5 Gew.-% und speziell 0,1 bis 1 Gew.-%, bezogen auf das Gesamtgewicht der Köderformulierung, der Komponente c);
   wobei die Gesamtkonzentration an Komponente b) und Komponente c), jeweils gerechnet als freie Säure und, bezogen auf das Gesamtgewicht der Köderformulierung, im Bereich von 0,11 bis 5 Gew.-% oder 0,2 bis 5 Gew.-%, besonders bevorzugt im Bereich von 0,2 bis 3 Gew.-% oder 0,3 bis 3 Gew.-%, ganz besonders bevorzugt im Bereich von 0,2 bis 1,8 Gew.-% oder 0,3 bis 1,8 Gew.-% und speziell im Bereich 0,3 bis 1,5 Gew.-% oder 0,4 bis 1,5 Gew.-% liegt,
d) 60 bis 99,89 Gew.-%, vorzugsweise 70 bis 99,85 Gew.-%, insbesondere 75 bis 99,8 Gew.-%, besonders bevorzugt 75 bis 99,5 Gew.-% oder 75 bis 99 Gew.-%, bezogen auf das Gesamtgewicht der Köderformulierung, wenigstens einer stärkehaltigen Komponente;
e1) 0,01 bis 0,19 Gew.-%, vorzugsweise von 0,03 bis 0,18 Gew.-% und insbesondere von 0,05 bis 0,15 Gew.-%, EDTA, oder ein Salz davon, wobei der Gehalt an EDTA auf die freie Säure und auf das Gesamtgewicht der Köderformulierung bezogen ist.

Neben den vorgenannten Bestandteilen können die erfindungsgemäßen Köderformulierungen auch weitere Bestandteile enthalten, welche in Köderformulierungen enthalten sein können. Hierzu zählen insbesondere proteinhaltige Substanzen (Komponente f), Glukose und Glukose-haltige Disaccharide (Komponente g), zerkleinerte Samen von Ölpflanzen (Komponente h) sowie sonstige konventionelle Formulierungsbestandteile wie Bindemittel, Konservierungsmittel, Farbstoffe, Schneckenlockstoffe, Gleitmittel, wasserabweisende Mittel, Mahlhilfsmittel, Additive, Bitterstoffe, Warmblüter-Repellents und/oder Anticakingmittel sowie auch weitere molluskizide Wirkstoffe. Die Gesamtmenge dieser Bestandteile wird in der Regel 30 Gew.-% und insbesondere 20 Gew.-%, bezogen auf das Gesamtgewicht der Formulierung nicht überschreiten und liegt typischerweise im Bereich von 2 bis 30 Gew.-% und insbesondere im Bereich von 2,5 bis 20 Gew.-%.

In einer weiteren bevorzugten Ausführungsform enthalten die erfindungsgemäßen Köderformulierungen zusätzlich zu den zuvor genannten Komponenten a), b) gegebenenfalls c), d), e1) gegebenenfalls e2) als Komponente f) wenigstens eine proteinhaltige Substanz.

Bevorzugte proteinhaltige Substanzen sind beispielsweise Kasein, Eiweißpulver, Eipulver, Fischmehl, Fleischmehl, Blutmehl, Proteinhydrolysate und deren Gemische.

Die wenigstens eine proteinhaltige Substanz ist in den erfindungsgemäßen Köderformulierungen in der Regel in einer Menge von 1 bis 10 Gew.-%, vorzugsweise 1 bis 7 Gew.-% und insbesondere 1 bis 5 Gew.-%, bezogen auf das Gesamtgewicht der Köderformulierung, enthalten.

In einer weiteren bevorzugten Ausführungsform enthalten die erfindungsgemäßen Köderformulierungen zusätzlich zu den zuvor genannten Komponenten a), b) gegebenenfalls c), d), e1) gegebenenfalls e2) und gegebenenfalls f) als Komponente g) Glukose und/oder ein glukosehaltiges Disaccharid.

Geeignete glukosehaltige Disaccharide sind beispielsweise Saccharose, Maltose, Isomaltose, Isomaltulose, Trehalose oder Lactose, wobei Saccharose bevorzugt ist.

Glukose und/oder das glukosehaltige Disaccharid sind in den erfindungsgemäßen Formulierungen in einer Gesamtmenge von beispielsweise 1 bis 10 Gew.-%, vorzugsweise 1 bis 5 Gew.-% und insbesondere 1 bis 3 Gew.-%, bezogen auf das Gesamtgewicht der Köderformulierung, enthalten.

Neben den vorgenannten Bestandteilen können die erfindungsgemäßen Formulierungen auch zerkleinerte, z. B. gemahlene oder geschrotene, Samen von Ölpflanzen enthalten (Komponente h). Hierzu zählen z. B. Samen von Raps, Rübsen, Senf, Ölrettich, Leindotter, Ölrauke, Krambe, Sonnenblume, Saflor, Distel, Ringelblume, Sojabohne, Lupine, Lein, Hanf, Ölkürbis, Mohn, Mais und Nüsse wie Erdnüsse. Sofern enthalten, wird die Menge an zerkleinerten Ölpflanzensamen 5 Gew.-%, insbesondere 3 Gew.-% nicht überschreiten und z. B. 0,1 bis 5 Gew.-% oder 0,2 bis 3 Gew.-% betragen. In einer bevorzugten Ausführungsform enthält die Formulierung keine oder weniger als 0,1 Gew.-%, bezogen auf die Köderformulierung, zerkleinerte Samen von Ölpflanzen.

Die erfindungsgemäßen Köderformulierungen können außerdem weitere Bestandteile enthalten, z. B. Bindemittel, Konservierungsmittel, Farbstoffe, Schneckenlockstoffe, Gleitmittel, wasserabweisende Mittel, Mahlhilfsmittel, Additive, Bitterstoffe, Warmblüter-Repellents und/oder Anticakingmittel sowie auch weitere molluskizide Wirkstoffe. Die Gesamtmenge an weiteren Bestandteilen, d. h. an Bestandteilen, die von den Komponenten a) bis h) verschieden sind, wird in der Regel nicht mehr als 10 Gew.-%, bezogen auf das Gesamtgewicht der Formulierung, betragen und liegt häufig im Bereich von 0,1 bis 10 Gew.-%, bezogen auf das Gesamtgewicht der Formulierung.

Geeignete Bindemittel sind beispielsweise modifizierte Stärke, Formaldehydabspaltende Substanzen, Polyvinylalkohol, gegebenenfalls teilverseiftes Polyvinylacetat und Melasse.

Modifizierte Stärken sind chemisch oder physikalisch bearbeitete Stärken, welche erhöhten technischen Anforderungen gerecht werden und beispielsweise eine bessere Hitzestabilität, Säurestabilität, Scherstabilität, eine bessere Quellfähigkeit, ein verbessertes Fließverhalten sowie ein besseres Gefrier- und Auftauverhalten aufweisen. Ihre Herstellung erfolgt beispielsweise durch die Behandlung natürlicher Stärke mit Säuren oder Basen, durch Oxidation, enzymatische Behandlung, Phosphatierung, Acetylierung, durch Hitze- und/oder Druckbehandlung u. v. m. Bevorzugte modifizierte Stärke ist kaltquellende Maisstärke.

Als Formaldehyd abspaltende Substanzen können alle üblichen Produkte enthalten sein, die zur Freisetzung von Formaldehyd geeignet sind. Bevorzugt sind Harnstoff-Formaldehyd-Kondensationsprodukte.

Als Polyvinylalkohole und Polyvinylacetate, die gegebenenfalls in teilweise verseifter Form vorliegen können, kommen vorzugsweise die unter den Handelsnamen Mowilith (Firma Clariant) und Mowiol (Firma Clariant) bekannten Produkte in Frage.

Unter Melasse sind im vorliegenden Fall übliche, bei der Fabrikation von Zucker anfallende sirupöse Mutterlaugen zu verstehen.

Als Konservierungsmittel kommen alle üblichen, für diesen Zweck geeigneten Substanzen in Betracht. Beispielhaft seien 2-Hydroxybiphenyl, Sorbinsäure und deren Salze wie Kaliumsorbat, p-Hydroxybenzaldehyd, p-Hydroxybenzoesäuremethylester, Benzaldehyd, Benzoesäure und deren Salze wie Natriumbenzoat, p-Hydroxybenzoesäurepropylester, Natamycin und p-Nitrophenol genannt. Derartige Konservierungsmittel werden üblicherweise in einer Menge von 0,01 bis 0,5 Gew.-%, bezogen auf das Gesamtgewicht der Köderformulierung, eingesetzt.

Als Farbstoffe kommen alle üblichen, für diesen Zweck geeignete Substanzen in Betracht. Beispielhaft seien anorganische Pigmente, wie Eisenoxid, Titandioxid und Ferrocyanblau, sowie organische Farbstoffe, wie Anthrachinon-, Azo- und Metallphthalocyaninfarbstoffe, erwähnt. Derartige Farbstoffe werden üblicherweise in einer Menge von 0,001 bis 0,1 Gew.-%, bezogen auf das Gesamtgewicht der Köderformulierung, eingesetzt.

Als Schneckenlockstoffe kommen alle üblichen, für diesen Zweck geeigneten Substanzen in Betracht. Beispielhaft genannt seien Pflanzenextrakte und deren Folgeprodukte sowie Produkte tierischer Herkunft, z. B. Bananenextrakt oder Hefe, v. a. Bierhefe.

Als Additive kommen Substanzen in Frage, die zur Einstellung des pH-Wertes in den Köderzubereitungen geeignet sind. Beispielhaft genannt sei Zitronensäure.

Als Mahlhilfsmittel kommen alle für diesen Zweck geeigneten Substanzen in Frage. Beispielhaft genannt seien Kaoline, Tonerden, Talkum, Kreide, Quarzpulver und hochdisperse Kieselsäure.

Als Gleitmittel kommen üblicherweise Stearate wie Magnesiumstearat oder Phyllosilikate wie Talkum in Betracht. Derartige Gleitmittel werden üblicherweise in einer Menge von 0,5 bis 8 Gew.-%, bezogen auf das Gesamtgewicht der Köderformulierung, eingesetzt.

Als wasserabweisende Mittel kommen beispielsweise Wachse oder wachsartige Substanzen, wie synthetische Wachse, wie Parrafin-Wachs, Fischer-Tropsch-Wachse, Polyethylenwachse, tierische Wachse, wie Bienenwachs oder Wollwachs, pflanzliche Wachse, wie Zuckerrohrwachs, Candelillawachs, oder Carnaubawachs sowie Mineralwachs, wie Ozokerit. Derartige wasserabweisende Mittel werden üblicherweise in einer Menge von 0,5 bis 8 Gew.-%, bezogen auf das Gesamtgewicht der Köderformulierung, eingesetzt.

Als Warmblüter-Repellents, die eine abweisende Wirkung auf warmblütige Lebewesen, wie Hunde oder Igel, ausüben, kommen alle für diesen Zweck üblichen Substanzen in Betracht. Beispielhaft genannt sei Nonylsäurevanillylamid.

Als Bitterstoffe kommen alle für diesen Zweck üblichen Substanzen in Frage. Beispielhaft genannt sei Denatoniumbenzoat.

Als Anticakingmittel kommen alle für diesen Zweck üblichen Stoffe in Betracht, die ein Verklumpen und Zusammenbacken verhindern. Beispielhaft genannt seien Feuchtigkeit adsorbierende Pulver, wie Kieselgur, pyrogene Kieselsäuren, Tricalciumphosphat, Calciumsilikate, Aluminiumoxid, Magnesiumoxid, Magnesiumcarbonat, Zinkoxid, Stearate und Fettamine.

Als zusätzliche molluskizide Wirkstoffe kommen alle für diesen Zweck geeigneten Substanzen in Betracht. Beispielhaft genannt seien Methiocarb, Metaldehyd sowie Metallsalze, gegebenenfalls im Gemisch mit Komplexbildnern, wobei Chelate aus Ethylendiamintetraessigsäure und Eisen- und/oder Kupferionen beispielhaft genannt seien. Bevorzugt enthält die erfindungsgemäße Formulierung jedoch keine weiteren molluskiziden Wirkstoffe. In einer bevorzugten Ausführungsform enthält die Formulierung keine oder weniger als 0,2 Gew.-%, bezogen auf die Formulierung, derartige weitere molluskizide Wirkstoffe.

Die erfindungsgemäßen Köderformulierungen führen beim Dispergieren in Wasser in einer Menge von 100 g/l zu einem pH-Wert des Wassers im Bereich von vorzugsweise 4 bis 10, besonders bevorzugt 4 bis 9,5 (bestimmt nach CIPAC MT 75), da ein höherer pH-Wert auf die meisten Schneckenarten eher abstoßend wirkt. Wenn MGDA, GLDA und/oder EDTA in Form ihrer Salze eingesetzt werden, kann man zur Erzielung der o. g. pH-Werte gegebenenfalls zusätzlich eine Säure einsetzen. Geeignet sind dabei insbesondere bei Raumtemperatur feste Säuren, die auf die Schnecken in den eingesetzten Mengen nicht abstoßend wirken, beispielsweise Zitronensäure, Äpfelsäure, Milchsäure und dergleichen.

Die erfindungsgemäße feste Formulierung liegt vorzugsweise in Form von Partikeln vor. Bevorzugt weisen die Partikel eine mittlere Abmessung im Bereich von 0,5 bis 6 mm, besonders bevorzugt von 1 bis 6 mm und insbesondere von 2 bis 6 mm auf. Die mittlere Abmessung bezieht sich dabei auf die gemittelten Werte der längsten Partikeldimension. Die mittlere Abmessung kann in an sich bekannter Weise bestimmt werden.

Die erfindungsgemäße Formulierung lässt sich durch übliche Verfahren zur Herstellung fester Schneckenköderformulierungen herstellen, wie sie beispielsweise in WO 03/069996, EP-A-1992226, WO 99/39576 oder WO 96/05728 beschrieben sind. Beispielsweise kann man alle oben genannten Komponenten gleichzeitig oder nacheinander mit einem Verdünnungsmittel, wie Wasser oder einem inerten organischen Lösungsmittel, mischen und zu einem Teig verarbeiten oder die oben genannten Komponenten zuerst miteinander trocken vermischen und erst dann mit Hilfe von Wasser oder einem inerten organischen Lösungsmittel zu einem Teig verarbeiten, extrudieren oder mahlen und das Extrudat bzw. Mahlgut bis zum gewünschten Feuchtegehalt trocknen und zerkleinern.

Die erfindungsgemäßen Formulierungen dienen zur Bekämpfung von terrestrischen, d. h. landlebenden Schnecken. Die erfindungsgemäßen Formulierungen wirken vermutlich als Fraßköder, d. h. die Schnecken nehmen den Köder auf und die Giftwirkung entfaltet sich im Verdauungstrakt der Schnecken.

Ein weiterer Gegenstand der Erfindung ist daher die Verwendung der erfindungsgemäßen Köderformulierung zur Bekämpfung von terrestrischen Schnecken und auch ein Verfahren zur Bekämpfung von terrestrischen Schnecken, wobei man wenigstens eine erfindungsgemäße Köderformulierung in dem Lebensraum der Schnecken ausbringt.

Terrestrische oder landlebende Schnecken gehören zur Unterklasse der Pulmonata.

Zu den erfindungsgemäß zu bekämpfenden Schnecken gehören alle landlebenden Nackt- und Gehäuseschnecken, welche in der Mehrzahl als polyphage Schädlinge landwirtschaftlicher und gärtnerischer Kulturen auftreten. Landwirtschaftlich und gartenbaulich problematische Schneckenarten sind beispielsweise Nacktschnecken, wie *Arion rufus* (Grosse Wegschnecke), *Arion ater, Arion lusitanicusr* und andere Arionidae, z. B. *Arion spp. , Arion subfuscus, Arion circumscriptus* und *Arion hortensis,* Limax-Arten, wie *Limax maximus, L. flavus, Limax glavus, Limax tenellus* und *Limax poirieri,* ferner Ackerschnecken, wie *Deroceras reticulatum* und *Deroceras agreste* aus der Familie Limacidae, sowie Arten aus der Familie Milacidae, wie *Milax gagates,* und außerdem schädliche Gehäuseschnecken, wie solche der Gattung Cepaea, z. B. *Cepaea nemoralis* und *Cepaea spp.,* Discus, Helicigona und Helicella.

Besonders problematisch sind die genetzte Ackerschnecke (*Deroceras reticulatum*) und die Spanische Wegschnecke (*Arion lusitanicus*).

Die Bekämpfung der Schnecken erfolgt durch übliche Verfahren, beispielsweise durch Ausbringen der erfindungsgemäßen Formulierung in den Lebensraum der zu bekämpfenden Schnecken, z. B. durch Streuen und/oder Eindrillen.

Bei der Bekämpfung von Schnecken kann die Aufwandmenge der erfindungsgemäßen Formulierung innerhalb eines größeren Bereiches variiert werden. Vorzugsweise verwendet man 2 bis 60 kg Formulierung pro Hektar, besonders bevorzugt 10 bis 50 kg pro Hektar.

Die erfindungsgemäße Formulierung hat eine vergleichbare molluskizide Wirksamkeit wie die Fraßmolluskizide des Standes der Technik, ist jedoch für Wirbeltiere nicht toxisch und weist auch nicht die Umweltmetallproblematik reiner EDTA-Formulierungen auf, da sie keine oder höchstens nur untergeordnete Mengen dieses Komplexbildners enthält. Insbesondere wird eine mit dem Stand der Technik vergleichbare molluskizide Wirkung und eine effektive Verhinderung von Fraßschäden auch bei geringen Eisengehalten erreicht.

Die Erfindung wird durch die folgenden, nicht-limitierenden Beispiele veranschaulicht.

### Beispiele

### Beispielformulierungen

Für die folgenden Untersuchungen wurde die folgende Grundformulierung verwendet:
GLDA, MGDA und/oder EDTA in den in Tabelle 1 angegebenen Mengen
Eisensalz in den in Tabelle 1 angegebenen Mengen
Leinsamenschrot 1,0 Gew.-%
Eiweißpulver 4, 0 Gew.-%
Saccharose 2,5 Gew.-%

Zusätzlich:
- 0,2 Gew.-% Konservierungsmittel (0,1 Gew.-% Kaliumsorbat und 0,1 Gew.-% einer kommerziellen Natamycin-Formulierung: Delvocid®)
- 0,01 Gew.-% Farbstoff
- 3,0 Gew.-% Magnesiumstearat
- 3,0 Gew.-% Paraffinwachs

Weizenmehl ad 100%

### Herstellung der Formulierungen:

Weizenmehl wurde mit Leinsamenschrot vermischt. Eiweißpulver wurde mit Saccharose, Eisensalz und den Komponenten b), c) und e) vermischt und kurz in einer Labormühle vermahlen. Zu 100 Gramm Feststoffmischung gab man 15 Gramm Wasser und verrührte die Mischung innig. Gleitmittel, Wachs Farbstoff und Konservierungsmittel wurden zugefügt, das Ganze vermischt und mit einem Laborextruder zu einem Strang extrudiert, zerkleinert und getrocknet.

**Tabelle 1:**

| Formulierung Nr. | Wirkbestandteil ^{1) 2)} | |
|---|---|---|
| 1A (nicht erfindungsgemäß) | Fe: | 3630 ppm, als Eisen(III)phosphat |
| | MGDA: | 9640 ppm, als Trinatriumsalz: |
| 2A (nicht erfindungsgemäß) | Fe: | 3630 ppm, als Eisen(III)phosphat |
| | MGDA: | 11570 ppm als Trinatriumsalz |
| 3A (nicht erfindungsgemäß) | Fe: | 7260 ppm als Eisen(III)phosphat |
| | MGDA: | 23140 ppm, als Trinatriumsalz: |
| 1 B (nicht erfindungsgemäß) | Fe: | 3630 ppm, als Eisen(III)phosphat |
| | GLDA: | 9830 ppm, als Tetranatriumsalz |
| 2B (nicht erfindungsgemäß) | Fe: | 3015, als Eisen(II)sulfat |
| | GLDA: | 9830 ppm, als Tetranatriumsalz |
| 1C (nicht erfindungsgemäß) | Fe: | 1300 ppm, als Eisen(III)phosphat |
| | EDTA: | 1000 ppm, als Dinatriumsalz |
| 2C (nicht erfindungsgemäß) | Fe: | 3630 ppm, als Eisen(III)phosphat |
| | EDTA: | 1000 ppm, als Dinatriumsalz |
| 3C (nicht erfindungsgemäß) | Fe: | 3630 ppm, als Eisen(III)phosphat |
| | EDTA: | 1000 ppm, als freie Säure |
| 1D (nicht erfindungsgemäß) | Fe: | 3630 ppm, als Eisen(III)phosphat |
| | MGDA: | 9640 ppm, als Trinatriumsalz |
| | GLDA: | 1092 ppm, als Tetranatriumsalz |
| 2D (nicht erfindungsgemäß) | Fe: | 3630 ppm, als Eisen(III)phosphat |
| | MGDA: | 9640 ppm, als Trinatriumsalz |
| | GLDA: | 2730 ppm, als Tetranatriumsalz |
| 3D (nicht erfindungsgemäß) | Fe: | 3630 ppm, als Eisen(III)phosphat |
| | MGDA: | 9640 ppm, als Trinatriumsalz |
| | GLDA: | 8190 ppm, als Tetranatriumsalz |
| 5D (nicht erfindungsgemäß) | Fe: | 3630 ppm, als Eisen(III)phosphat |
| | MGDA: | 6426 ppm, als Trinatriumsalz |
| | GLDA: | 7400 ppm, als Tetranatriumsalz |
| 6D (nicht erfindungsgemäß) | Fe: | 3015, als Eisen(II)sulfat |
| | MGDA: | 6426 ppm, als Trinatriumsalz |
| | GLDA: | 7400 ppm, als Tetranatriumsalz |
| 1E | Fe: | 1300 ppm, als Eisen(III)phosphat |
| | MGDA: | 12852 ppm, als Trinatriumsalz |
| | EDTA: | 1000 ppm, als Dinatriumsalz |
| 2E | Fe: | 3630 ppm, als Eisen(III)phosphat |
| | MGDA: | 16065 ppm, als Trinatriumsalz |
| | EDTA: | 1000 ppm, als freie Säure |
| 3E | Fe: | 3630 ppm, als Eisen(III)phosphat |
| | MGDA: | 19278 ppm, als Trinatriumsalz |
| | EDTA: | 1000 ppm, als freie Säure |
| 4E | Fe: | 4533 ppm, als Eisen(III)phosphat ³⁾ |
| | MGDA: | 19278 ppm, als Trinatriumsalz |
| | EDTA: | 1000 ppm, als freie Säure |
| 5E | Fe: | 4630 ppm, als Eisen(III)phosphat ³⁾ |
| | MGDA: | 6800 ppm, als Trinatriumsalz |
| | EDTA: | 900 ppm, als freie Säure |
| 1F | Fe: | 3630 ppm, als Eisen(III)phosphat |
| | MGDA: | 16065 ppm, als Trinatriumsalz |
| | GLDA: | 2730 ppm, als Tetranatriumsalz |
| | EDTA: | 1000 ppm, als freie Säure |

| | | |
|---|---|---|
| 1) Die angegebene Menge an Eisen bezieht sich auf reines Eisen ohne Gegenion. 2) Die angegebene Menge an GLDA, MGDA bzw. EDTA bezieht sich jeweils auf die freie Säure. 3) Bei dem eingesetzten Eisenphosphat handelte es sich um ein nanofeines Eisenphosphat mit einer Primärteilchengröße von < 1 µm. | | |

### Untersuchung der molluskiziden Wirkung:

Die erfindungsgemäßen Formulierungen wurden sowohl in Laborversuchen als auch in Freilandversuchen auf ihre molluskizide Wirkung getestet.

### 1. Laborversuche:

Die Versuche zur Wirksamkeit wurden in 17 cm x 12 cm x 6 cm großen Kunststoffschalen mit jeweils 3 bzw. 5 Schnecken der Gattungen Arion spp. bzw. Deroceras spp. durchgeführt. Der Boden jeder Schale wurde mit nassem Filterpapier bedeckt, die Schalen mit lichtdurchlässigen Kunststoffdeckeln, die kleine Luftlöcher enthielten, verschlossen. Von den Formulierungen wurden jeweils 2 g in eine Glaspetrischale (Durchmesser 3 - 5 cm, Höhe 0,7 - 1,0 cm) sowie ein Kopfsalatblatt, das wochentäglich erneuert wurde, gegeben. Die Versuche wurden unter normalen Tageslichtbedingungen in einem Laborraum durchgeführt.
Die nachfolgende Tabelle 2 zeigt die Schneckenmortalität (getötete Schnecken/eingesetzte Schnecken) nach x Tagen (DAT) sowie den Köderverzehr und den Fraßschaden in Prozent.

**Tabelle 2:**

| Formulierung | Schneckenart | tote/ eingesetzte | DAT | Köderverzehr | Fraßschaden |
|---|---|---|---|---|---|
| 1A¹⁾ | Arion rufus | 3/3 | 5 | 81 % | 30 % |
| 2A¹⁾ | Arion rufus | 5/5 | 7 | 76 % | 10% |
| 3A¹⁾ | Arion rufus | 4/5 | 14 | 70 % | 10% |
| 3A¹⁾ | Deroceras | 3/3 | 6 | < 10 % | 0 |
| | reticulatum | | | 30 Körner | |
| | | | | verteilt | |
| 1B¹⁾ | Arion rufus | 3/5 | 14 | 100 % | 30 % |
| 1B¹⁾ | Deroceras reticulatum | 2/5 | 14 | < 10 % 30 Körner verteilt | 1 % |
| 2B¹⁾ | Deroceras | 4/5 | 14 | < 10 % | 1 % |
| | reticulatum | | | 30 Körner | |
| | | | | verteilt | |
| 1C¹⁾ | Arion rufus | 0/3 | 14 | 90 % | 85 % |
| 2C¹⁾ | Arion lusitanicus | 0/3 | 14 | 50 % | 50 % |
| 3C¹⁾ | Arion lusitanicus | 0/5 | 14 | 100 % | 100 % |
| 1D¹⁾ | Arion lusitanicus | 5/5 | 12 | 81 % | 0% |
| 2D¹⁾ | Arion lusitanicus | 4/5 | 12 | 62 % | 0% |
| 3D¹⁾ | Arion lusitanicus | 5/5 | 12 | 36 % | 0% |
| 5D¹⁾ | Arion rufus | 4/5 | 12 | 100 % | 30 % |
| 5D¹⁾ | Deroceras | 4/5 | 14 | < 10 % | 1 % |
| | reticulatum | | | 30 Körner | |
| | | | | verteilt | |
| 6D¹⁾ | Arion lusitanicus | 3/5 | 12 | 81 % | 5% |
| 1E | Arion rufus | 4/5 ³⁾ | 8 | 30 % | 0% |
| 2E | Arion lusitanicus | 3/3 | 6 | 20 % | 25 % |
| 3E | Arion lusitanicus | 3/3 | 6 | 30 % | 10% |
| 3E | Arion rufus | 5/5 | 4 | 95 % | 0% |
| 4E | Arion lusitanicus | 5/5 | 4 | 90 % | 0 % |
| 5E | Deroceras reticulatum | 10/10 | 14 | < 10 % | 0% |
| 5E | Arion lusitanicus | 5/5 | 4 | 85 % | 0 % |
| 1F | Arion lusitanicus | 3/3 | 5 | 70 % | 0 % |
| Biomol^{® 2)} | Arion rufus | 0/3 | 14 | 5 % | 60 % |

| | | | | | |
|---|---|---|---|---|---|
| ¹⁾ nicht erfindungsgemäß ²⁾ Biomol^{®} Schneckenkorn, Handelsmarke der Firma Bayer CropScience Deutschland GmbH, Langenfeld / Deutschland ³⁾ eine Schnecke verschwunden | | | | | |

### 2. Feldversuch

Der Versuch wurden im Gewächshaus nach GEP (Good Experimental Practice) und unter Beachtung der EPPO (European and Mediterranean Plant Protection Organisation), Guideline PP 1/95(3), durchgeführt. Die schneckensicher abgegrenzten Versuchsparzellen wiesen eine Größe von 1,15 x 1,15 m auf und lagen mindestens 2 m voneinander entfernt. Pro Versuchsglied wurden vier Wiederholungen angelegt. In die Parzellen wurden je 13 Futterpflanzen (Kopfsalat, BBCH 13 -14) gepflanzt. Vollständig abgefressene Pflanzen wurden durch Gurkenscheiben ersetzt. Den Schnecken wurden Tagesverstecke in Form von drei kleinen Brettern (10 cm x 20 cm) je Parzelle angeboten. Ein Tag später wurden die Schneckenkornformulierungen breitwürfig mit 5 g/m² auf der Versuchsfläche verteilt und 13 Nacktschnecken der Art Arion lusitanicus hineingesetzt. Als zugelassenes Vergleichsmittel wurde Ferramol Schneckenkorn (Zulassungsnummer 024496-00, 5 g/m²) verwendet.

Die nachfolgende Tabelle 3 zeigt die Schneckenmortalität (in Prozent) sowie den Fraßschaden (in Prozent) nach x Tagen (DAT). Die Phytotoxizität gibt den Schaden an den Pflanzen wider, der durch die Mittel verursacht worden sind.

**Tabelle 3:**

| Formulierung | Mortalität % | Fraßschaden % | DAT | Phytotox |
|---|---|---|---|---|
| 2A | 15,4 | 2,1 | 2 | keine |
| 2A | 61,5 | 5,5 | 4 | keine |
| 2A | 80,8 | 5,9 | 7 | keine |
| 2A | 100,0 | 4,4 | 14 | keine |
| ohne¹⁾ | 0,0 | 37,8 | 2 | - |
| ohne | 5,8 | 72,6 | 4 | - |
| ohne | 19,2 | 78,5 | 7 | - |
| ohne | 26,9 | 80,0 | 14 | - |
| Ferramol^{® 2)} | 25,0 | 0,0 | 2 | keine |
| Ferramol^{® 2)} | 88,5 | 0,3 | 4 | keine |
| Ferramol^{® 2)} | 100 | 0,1 | 7 | keine |
| Ferramol^{® 2)} | 100 | 0,1 | 14 | keine |

| | | | | |
|---|---|---|---|---|
| ¹⁾ "ohne" = unbehandelte Parzellen zum Vergleich ²⁾ Ferramol^{®} Schneckenkorn Handelsmarke der Firma W. Neudorff GmbH KG, Emmerthal/Deutschland | | | | |

Die nachfolgende Tabelle 3 zeigt die Schneckenmortalität (in Prozent) sowie den Fraßschaden (in Prozent) nach x Tagen (DAT). Die Phytotoxizität gibt den Schaden an den Pflanzen wider, der durch die Mittel verursacht worden sind.

**Tabelle 3:**

| Formulierung | Mortalität % | Fraßschaden % | DAT | Phytotox |
|---|---|---|---|---|
| 2A | 15,4 | 2,1 | 2 | keine |
| 2A | 61,5 | 5,5 | 4 | keine |
| 2A | 80,8 | 5,9 | 7 | keine |
| 2A | 100,0 | 4,4 | 14 | keine |
| ohne¹⁾ | 0,0 | 37,8 | 2 | - |
| ohne | 5,8 | 72,6 | 4 | - |
| ohne | 19,2 | 78,5 | 7 | - |
| ohne | 26,9 | 80,0 | 14 | - |
| Ferramol^{® 2)} | 25,0 | 0,0 | 2 | keine |
| Ferramol^{® 2)} | 88,5 | 0,3 | 4 | keine |
| Ferramol^{® 2)} | 100 | 0,1 | 7 | keine |
| Ferramol^{® 2)} | 100 | 0,1 | 14 | keine |

| | | | | |
|---|---|---|---|---|
| ¹⁾ "ohne" = unbehandelte Parzellen zum Vergleich ²⁾ Ferramol^{®} Schneckenkorn Handelsmarke der Firma W. Neudorff GmbH KG, Emmerthal/Deutschland | | | | |

## Patentansprüche

1. Köderformulierung in fester Form, enthaltend:
a) wenigstens ein Eisensalz;
b) die Komponente b) ausgewählt aus Methylglycin-N,N-diessigsäure, den Alkalimetallsalzen, Erdalkalimetallsalzen und Ammoniumsalzen davon und deren Gemischen;
c) gegebenenfalls Komponente c) ausgewählt aus Glutamin-N,N-diessigsäure, den Alkalimetallsalzen, Erdalkalimetallsalzen und Ammoniumsalzen davon und deren Gemischen;
d) wenigstens eine stärkehaltige Komponente;
und
e1) Ethylen-1,2-diamino-N,N,N',N'-tetraessigsäure und/oder ein Salz davon.

2. Köderformulierung nach Anspruch 1, enthaltend das Eisensalz, gerechnet als Fe, in einer Konzentration von 0,01 bis 5 Gew.-% und bezogen auf das Gesamtgewicht der Köderformulierung.

3. Köderformulierung nach einem der vorhergehenden Ansprüche, worin das Eisensalz ausgewählt ist unter Eisen(II)sulfat, Eisen(II)phosphat, Eisen(III)phosphat, Eisen(III)citrat, Eisen(II)edetat, Eisen(III)edetat, Eisen(III)oxid, Eisen(III)albuminat, Eisen(III)chlorid, Eisen(II)gluconat, Eisen(II)lactat, Eisen(III)pyrophosphat, Eisen(III)nitrat, Eisen(II)stearat, Eisen(III)stearat, Eisen(III)tartrat, Eisenfumarat, Eisenproteinen, Eisenkohlenhydraten, den Hydraten der vorgenannten Salze und Gemische davon.

4. Köderformulierung nach Anspruch 3, enthaltend die Komponente b) in einer Konzentration von 0,05 bis 10 Gew.-%, gerechnet als freie Säure und bezogen auf das Gesamtgewicht der Köderformulierung.

5. Köderformulierung nach einem der Ansprüche 3 oder 4, enthaltend zusätzlich die Komponente c).

6. Köderformulierung nach Anspruch 5, worin das Gewichtsverhältnis der Komponente b), zur Komponente c), jeweils bezogen auf die freien Säuren, im Bereich von 1 : 0,3 bis 1 : 20 liegt.

7. Köderformulierung nach Anspruch 5 oder 6, enthaltend die Komponente c) in einer Konzentration von 0,01 bis 2,5 Gew.-%, gerechnet als freie Säure und bezogen auf das Gesamtgewicht der Köderformulierung, wobei die Gesamtkonzentration an Komponente b) und Komponente c), jeweils gerechnet als freie Säure und bezogen auf das Gesamtgewicht der Köderformulierung, im Bereich von 0,11 bis 5 Gew.-% liegt.

8. Köderformulierung nach einem der vorhergehenden Ansprüche, enthaltend 0,01 bis 0,19 Gew.-% als Komponente e1) Ethylen-1,2-diamino-N,N,N',N'-tetraessig-säure und/oder ein Alkalimetallsalz, Erdalkalimetallsalz, Eisenkomplex oder Ammoniumsalz davon, gerechnet als freie Säure und bezogen auf das Gesamtgewicht der Köderformulierung.

9. Köderformulierung in fester Form, enthaltend:
a) 0,01 bis 5 Gew.-%, bezogen auf das Gesamtgewicht der Köderformulierung, Eisen in Form des wenigstens eines Eisensalzes;
b) 0,1 bis 5 Gew.-%, bezogen auf das Gesamtgewicht der Köderformulierung, der Komponente b);
c) gegebenenfalls 0,01 bis 2,5 Gew.-%, bezogen auf das Gesamtgewicht der Köderformulierung, der Komponente c);
wobei die Gesamtkonzentration an Komponente b) und Komponente c), jeweils gerechnet als freie Säure und, bezogen auf das Gesamtgewicht der Köderformulierung, im Bereich von 0,11 bis 5 Gew.-% liegt;
d) 60 bis 99,89 Gew.-%, bezogen auf das Gesamtgewicht der Köderformulierung, wenigstens einer stärkehaltigen Komponente, und
e1) 0,01 bis 0,19 Gew.-%, gerechnet als freie Säure und bezogen auf das Gesamtgewicht der Köderformulierung, Ethylen-1,2-diamino-N,N,N',N'-tetraessigsäure und/oder ein Alkalimetallsalz, Erdalkalimetallsalz, Eisenkomplex oder Ammoniumsalz davon.

10. Köderformulierung in fester Form, enthaltend:
a) 0,1 bis 0,9 Gew.-%, bezogen auf das Gesamtgewicht der Köderformulierung, Eisen in Form des wenigstens eines Eisensalzes;
b) 0,2 bis 1,8 Gew.-%, bezogen auf das Gesamtgewicht der Köderformulierung, der Komponente b);
c) gegebenenfalls 0,1 bis 1 Gew.-%, bezogen auf das Gesamtgewicht der Köderformulierung, der Komponente c);
wobei die Gesamtkonzentration an Komponente b) und Komponente c), jeweils gerechnet als freie Säure und, bezogen auf das Gesamtgewicht der Köderformulierung, im Bereich von 0,2 bis 1,8 Gew.-% liegt;
d) 75 bis 99,7 Gew.-%, bezogen auf das Gesamtgewicht der Köderformulierung, wenigstens einer stärkehaltigen Komponente, und
e1) 0,01 bis 0,19 Gew.-%, gerechnet als freie Säure und bezogen auf das Gesamtgewicht der Köderformulierung, Ethylen-1,2-diamino-N,N,N',N'-tetraessigsäure und/oder ein Alkalimetallsalz, Erdalkalimetallsalz, Eisenkomplex oder Ammoniumsalz davon.

11. Köderformulierung nach einem der vorhergehenden Ansprüche, enthaltend zusätzlich wenigstens eine proteinhaltige Substanz.

12. Köderformulierung nach einem der vorhergehenden Ansprüche, enthaltend zusätzlich Glukose und/oder ein glukosehaltiges Disaccharid.

13. Köderformulierung nach einem der vorhergehenden Ansprüche, in Form von Partikeln mit mittleren Abmessungen im Bereich von 0,5 bis 6 mm.

14. Verwendung einer Köderformulierung nach einem der vorhergehenden Ansprüche zur Bekämpfung von terrestrischen Schnecken.

15. Verfahren zur Bekämpfung von terrestrischen Schnecken, wobei man wenigstens eine Köderformulierung nach einem der Ansprüche 1 bis 13in dem Lebensraum der Schnecken ausbringt.

## Claims

1. Bait formulation in solid form comprising:
a) at least one iron salt;
b) component b) selected from methylglycine-N,N-diacetic acid, the alkali metal salts, alkaline earth metal salts and ammonium salts thereof, and mixtures thereof;
c) optionally component c) selected from glutamine-N,N-diacetic acid, the alkali metal salts, alkaline earth metal salts and ammonium salts thereof, and mixtures thereof;
d) at least one starch-containing component; and
e1) ethylene-1,2-diamino-N,N,N',N'-tetraacetic acid and/or a salt thereof.

2. Bait formulation according to Claim 1, comprising the iron salt, calculated as Fe, in a concentration of 0.01 to 5% by weight and based on the total weight of the bait formulation.

3. Bait formulation according to either of the preceding claims, in which the iron salt is selected from iron(II) sulfate, iron(II) phosphate, iron(III) phosphate, iron(III) citrate, iron(II) edetate, iron(III) edetate, iron(III) oxide, iron(III) albuminate, iron(III) chloride, iron(II) gluconate, iron(II) lactate, iron(III) pyrophosphate, iron(III) nitrate, iron(II) stearate, iron(III) stearate, iron(III) tartrate, iron fumarate, iron proteins, iron carbohydrates, the hydrates of the aforementioned salts and mixtures thereof.

4. Bait formulation according to Claim 3, comprising component b) in a concentration of 0.05 to 10% by weight, calculated as free acid and based on the total weight of the bait formulation.

5. Bait formulation according to either of Claims 3 and 4, additionally comprising component c).

6. Bait formulation according to Claim 5, in which the weight ratio of component b) to component c), based in each case on the free acids, is in the range from 1:0.3 to 1:20.

7. Bait formulation according to Claim 5 or 6, comprising component c) in a concentration of 0.01 to 2.5% by weight, calculated as the free acid and based on the total weight of the bait formulation, where the total concentration of component b) and component c), calculated in each case as the free acid and based on the total weight of the bait formulation, is in the range from 0.11 to 5% by weight.

8. Bait formulation according to any of the preceding claims, comprising 0.01 to 0.19% by weight, as component e1), of ethylene-1,2-diamino-N,N,N',N'-tetraacetic acid and/or an alkali metal salt, alkaline earth metal salt, iron complex or ammonium salt thereof, calculated as the free acid and based on the total weight of the bait formulation.

9. Bait formulation in solid form comprising:
a) 0.01 to 5% by weight, based on the total weight of the bait formulation, of iron in the form of the at least one iron salt;
b) 0.1 to 5% by weight, based on the total weight of the bait formulation, of component b);
c) optionally 0.01 to 2.5% by weight, based on the total weight of the bait formulation, of component c);
where the total concentration of component b) and component c), calculated in each case as the free acid and based on the total weight of the bait formulation, is in the range from 0.11 to 5% by weight;
d) 60 to 99.89% by weight, based on the total weight of the bait formulation, of at least one starch-containing component, and
e1) 0.01 to 0.19% by weight, calculated as the free acid and based on the total weight of the bait formulation, of ethylene-1,2-diamino-N,N,N',N'-tetraacetic acid and/or an alkali metal salt, alkaline earth metal salt, iron complex or ammonium salt thereof.

10. Bait formulation in solid form comprising:
a) 0.1 to 0.9% by weight, based on the total weight of the bait formulation, of iron in the form of the at least one iron salt;
b) 0.2 to 1.8% by weight, based on the total weight of the bait formulation, of component b) ;
c) optionally 0.1 to 1% by weight, based on the total weight of the bait formulation, of component c);
where the total concentration of component b) and component c), calculated in each case as the free acid and based on the total weight of the bait formulation, is in the range from 0.2 to 1.8% by weight;
d) 75 to 99.7% by weight, based on the total weight of the bait formulation, of at least one starch-containing component, and
e1) 0.01 to 0.19% by weight, calculated as the free acid and based on the total weight of the bait formulation, of ethylene-1,2-diamino-N,N,N',N'-tetraacetic acid and/or an alkali metal salt, alkaline earth metal salt, iron complex or ammonium salt thereof.

11. Bait formulation according to any of the preceding claims, additionally comprising at least one protein-containing substance.

12. Bait formulation according to any of the preceding claims, additionally comprising glucose and/or a glucose-containing disaccharide.

13. Bait formulation according to any of the preceding claims, in the form of particles having mean dimensions in the range from 0.5 to 6 mm.

14. Use of a bait formulation according to any of the preceding claims for control of terrestrial slugs and snails.

15. Method for controlling terrestrial slugs and snails, wherein at least one bait formulation according to any of Claims 1 to 13 is deployed in the habitat of the slugs or snails.

## Revendications

1. Formulation d'appât sous forme solide, contenant :
a) au moins un sel de fer ;
b) le composant b) choisi parmi l'acide méthylglycine-N,N-diacétique, les sels de métaux alcalins, les sels de métaux alcalino-terreux et les sels d'ammonium de celui-ci, et leurs mélanges ;
c) éventuellement un composant c) choisi parmi l'acide glutamine-N,N-diacétique, les sels de métaux alcalins, les sels de métaux alcalino-terreux et les sels d'ammonium de celui-ci, et leurs mélanges ;
d) au moins un composant contenant de l'amidon ;
et
e1) de l'acide éthylène-1,2-diamino-N,N,N',N'-tétraacétique et/ou un sel de celui-ci.

2. Formulation d'appât selon la revendication 1, contenant le sel de fer, calculé en tant que Fe, en une concentration de 0,01 à 5 % en poids et par rapport au poids total de la formulation d'appât.

3. Formulation d'appât selon l'une quelconque des revendications précédentes, dans laquelle le sel de fer est choisi parmi le sulfate de fer (II), le phosphate de fer (II), le phosphate de fer (III), le citrate de fer (III), l'édétate de fer (II), l'édétate de fer (III), l'oxyde de fer (III), l'albuminate de fer (III), le chlorure de fer (III), le gluconate de fer (II), le lactate de fer (II), le pyrophosphate de fer (III), le nitrate de fer (III), le stéarate de fer (II), le stéarate de fer (III), le tartrate de fer (III), le fumarate de fer, les protéines de fer, les glucides de fer, les hydrates des sels susmentionnés et leurs mélanges.

4. Formulation d'appât selon la revendication 3, contenant le composant b) en une concentration de 0,05 à 10 % en poids, calculée en tant qu'acide libre et par rapport au poids total de la formulation d'appât.

5. Formulation d'appât selon l'une quelconque des revendications 3 ou 4, contenant en outre le composant c).

6. Formulation d'appât selon la revendication 5, dans laquelle le rapport en poids entre le composant b) et le composant c), à chaque fois par rapport aux acides libres, se situe dans la plage allant de 1:0,3 à 1:20.

7. Formulation d'appât selon la revendication 5 ou 6, contenant le composant c) en une concentration de 0,01 à 2,5 % en poids, calculée en tant qu'acide libre et par rapport au poids total de la formulation d'appât, la concentration totale de composant b) et de composant c), à chaque fois calculée en tant qu'acide libre et par rapport au poids total de la formulation d'appât, se situant dans la plage allant de 0,11 à 5 % en poids.

8. Formulation d'appât selon l'une quelconque des revendications précédentes, contenant 0,01 à 0,19 % en poids en tant que composant e1) d'acide éthylène-1,2-diamino-N,N,N',N'-tétraacétique et/ou d'un sel de métal alcalin, d'un sel de métal alcalino-terreux, d'un complexe de fer ou d'un sel d'ammonium de celui-ci, calculé en tant qu'acide libre et par rapport au poids total de la formulation d'appât.

9. Formulation d'appât sous forme solide, contenant :
a) 0,01 à 5 % en poids, par rapport au poids total de la formulation d'appât, de fer sous la forme dudit au moins un sel de fer ;
b) 0,1 à 5 % en poids, par rapport au poids total de la formulation d'appât, du composant b) ;
c) éventuellement 0,01 à 2,5 % en poids, par rapport au poids total de la formulation d'appât, du composant c) ;
la concentration totale de composant b) et de composant c), à chaque fois calculée en tant qu'acide libre et par rapport au poids total de la formulation d'appât, se situant dans la plage allant de 0,11 à 5 % en poids ;
d) 60 à 99, 89 % en poids, par rapport au poids total de la formulation d'appât, d'au moins un composant contenant de l'amidon, et
e1) 0,01 à 0,19 % en poids, calculé en tant qu'acide libre et par rapport au poids total de la formulation d'appât, d'acide éthylène-1,2-diamino-N,N,N',N'-tétraacétique et/ou d'un sel de métal alcalin, d'un sel de métal alcalino-terreux, d'un complexe de fer ou d'un sel d'ammonium de celui-ci.

10. Formulation d'appât sous forme solide, contenant :
a) 0,1 à 0,9 % en poids, par rapport au poids total de la formulation d'appât, de fer sous la forme dudit au moins un sel de fer ;
b) 0,2 à 1,8 % en poids, par rapport au poids total de la formulation d'appât, du composant b) ;
c) éventuellement 0,1 à 1 % en poids, par rapport au poids total de la formulation d'appât, du composant c) ;
la concentration totale de composant b) et de composant c), à chaque fois calculée en tant qu'acide libre et par rapport au poids total de la formulation d'appât, se situant dans la plage allant de 0,2 à 1,8 % en poids ;
d) 75 à 99,7 % en poids, par rapport au poids total de la formulation d'appât, d'au moins un composant contenant de l'amidon, et
e1) 0,01 à 0,19 % en poids, calculé en tant qu'acide libre et par rapport au poids total de la formulation d'appât, d'acide éthylène-1,2-diamino-N,N,N',N'-tétraacétique et/ou d'un sel de métal alcalin, d'un sel de métal alcalino-terreux, d'un complexe de fer ou d'un sel d'ammonium de celui-ci.

11. Formulation d'appât selon l'une quelconque des revendications précédentes, contenant en outre au moins une substance contenant des protéines.

12. Formulation d'appât selon l'une quelconque des revendications précédentes, contenant en outre du glucose et/ou un disaccharide contenant du glucose.

13. Formulation d'appât selon l'une quelconque des revendications précédentes, sous la forme de particules de dimensions moyennes dans la plage allant de 0,5 à 6 mm.

14. Utilisation d'une formulation d'appât selon l'une quelconque des revendications précédentes pour lutter contre les escargots terrestres.

15. Procédé de lutte contre les escargots terrestres, selon lequel au moins une formulation d'appât selon l'une quelconque des revendications 1 à 13 est appliquée dans l'habitat des escargots.
